(19) Europäisches Patentamt
European Patent Office
Office européen des brevets

(11) **EP 4 610 689 A1**

(12) **EUROPEAN PATENT APPLICATION**

(43) Date of publication:
**03.09.2025 Bulletin 2025/36**

(21) Application number: **24160554.2**

(22) Date of filing: **29.02.2024**

(51) International Patent Classification (IPC):
**G01S 7/02** (2006.01)   **G01S 7/40** (2006.01)
**G01S 13/34** (2006.01)   **G01S 13/931** (2020.01)

(52) Cooperative Patent Classification (CPC):
**G01S 7/028; G01S 7/4021; G01S 7/406;**
**G01S 7/4082;** G01S 7/356; G01S 7/4056;
G01S 13/34; G01S 13/931

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventor: **Fliess, Thomas**
**5656 AG Eindhoven (NL)**

(74) Representative: **Krott, Michel**
**NXP Semiconductors**
**Intellectual Property Group**
**High Tech Campus 60**
**5656 AG  Eindhoven (NL)**

Remarks:
Claims filed after the date of filing of the application (Rule 68(4) EPC).

(54) **RADAR DEVICE AND CORRESPONDING OPERATING METHOD**

(57)     In accordance with a first aspect of the present disclosure, a radar device is provided, comprising: a plurality of receiver channels; a plurality of mixers, wherein each of the receiver channels comprises one of said mixers; a first frequency synthesizer configured to generate a chirp signal; at least one test tone generator configured to generate a test tone signal having a constant frequency; wherein said mixers are configured to be fed with said chirp signal and with the test tone signal. In accordance with a second aspect of the present disclosure, a corresponding method of operating a radar device is conceived.

Fig. 4

400 Radar Device

402 Receiver Channel — 404 Mixer

406 Receiver Channel — 408 Mixer

412 Test Tone Generator

410 First Frequency Synthesizer

**Description**

TECHNICAL FIELD

The present disclosure relates to a radar device. Furthermore, the present disclosure relates to a corresponding method of operating a radar device.

BACKGROUND

Automotive radar solutions for advanced driver assistance systems (ADAS) are currently being deployed on a large scale. These solutions can typically be grouped into long-range radar applications (LRR) and short-range radar (SRR) applications. Both of these applications typically use radar devices that apply frequency modulated continuous wave (FMCW) modulation techniques in order to be able to identify a radar target, such as a car or a pedestrian. These radar devices, which may also be referred to as radar sensors, typically utilize millimeter wave (mmW) frequencies for transmission and reception.

SUMMARY

In accordance with a first aspect of the present disclosure, a radar device is provided, comprising: a plurality of receiver channels; a plurality of mixers, wherein each of the receiver channels comprises one of said mixers; a first frequency synthesizer configured to generate a chirp signal; at least one test tone generator configured to generate a test tone signal having a constant frequency; wherein said mixers are configured to be fed with said chirp signal and with the test tone signal.

In one or more embodiments, the radar device further comprises at least one transmitter, wherein the test tone generator is configured to be coupled to the transmitter through a switch.

In one or more embodiments, the test tone generator is configured to be coupled to the receiver channels through a built-in self-test (BIST) structure.

In one or more embodiments, the test tone generator is implemented as a second frequency synthesizer, wherein said second frequency synthesizer is embedded in a follower integrated circuit (IC) of the radar device.

In one or more embodiments, the receiver channels are distributed over multiple ICs, and each of the ICs comprises a test tone generator configured to be coupled to the respective receiver channels of said ICs through a BIST structure of said ICs.

In one or more embodiments, the radar device further comprises a post-processing unit configured to derive time offsets between the receiver channels from digitized output signals provided by the mixers.

In one or more embodiments, the post-processing unit is configured to compute a set of fast Fourier transforms (FFTs) of said digitized output signals.

In one or more embodiments, the post-processing unit is configured to multiply, for given pairs of the receiver channels, the FFTs in the frequency domain and to compute a corresponding phase of sub-carriers.

In one or more embodiments, the post-processing unit is configured to fit phase-over-frequency data derived from the computed phase of the sub-carriers by a first-order polynomial whose slope is a measure of the time offsets.

In one or more embodiments, the receiver channels comprise analog-to-digital converters configured to digitize the output signals provided by the mixers.

In one or more embodiments, the receiver channels comprise filters configured to filter the output signals provided by the mixers.

In one or more embodiments, a vehicle comprises a radar device of the kind set forth.

In accordance with a second aspect of the present disclosure, a method of operating a radar device is conceived, comprising: generating, by a first frequency synthesizer included in the radar device, a chirp signal; generating, by at least one test tone generator included in the radar device, a test tone signal having a constant frequency; feeding mixers included in receiver channels of the radar device with the chirp signal and the test tone signal.

In one or more embodiments, the method further comprises deriving, by a post-processing unit included in the radar device, time offsets between the receiver channels from digitized output signals provided by the mixers.

DESCRIPTION OF DRAWINGS

Embodiments will be described in more detail with reference to the appended drawings.

Fig. 1 shows an example of a radar device.

Fig. 2 shows a signal diagram for the radar device shown in Fig. 1.

Fig. 3 shows an example of coupling paths on a radar sensor board.

Fig. 4 shows an illustrative embodiment of a radar device.

Fig. 5 shows an illustrative embodiment of a method of operating a radar device.

Fig. 6 shows another illustrative embodiment of a radar device.

Fig. 7 shows a signal diagram for the radar device shown in Fig. 6.

Fig. 8 shows a further illustrative embodiment of a radar device.

Fig. 9 shows an example of coupling paths on a radar sensor board with cascaded ICs.

Fig. 10 shows a further illustrative embodiment of a radar device.

Fig. 11 shows a further illustrative embodiment of a radar device.

Fig. 12 shows a further illustrative embodiment of a radar device.

Fig. 13 shows an illustrative embodiment of a test execution flow.

DESCRIPTION OF EMBODIMENTS

To enable the development of functionally safe radar systems, FMCW radar multiple-input, multiple-output (MIMO) sensors or systems are typically capable of measuring the consistency and stability of the signal phase between their receiver (RX) channels, to guarantee a coherent combining and proper operation of direction-of-arrival algorithms. However, it is also crucial to test the time synchronization between those RX channels, because timing deviations introduce phase errors which increase linearly over frequency in the intermediate frequency (IF) part of the RX channels.
While it may be possible to test IC-internal time synchronicity by comparing for example edges of control signals, this becomes much more complicated when a radar system deploys so-called cascading where one transceiver chip - referred to as a leader - is generating the basic frequency modulated signal and a trigger signal to all other transceiver chips - referred to as follower(s). In such a case, the test of the time synchronization could be performed by feeding back a digital signal from the follower IC(s) to the leader IC and checking the time alignment between the local and the remote trigger signal. However, this requires additional wiring between the ICs and occupies usually limited input/output (IO) resources. Furthermore, the accuracy may be rather low due to the limited bandwidth of the IO connection.
Generally speaking, measurement and test methods that utilize analog RF signals may provide sufficient accuracy with respect to phase errors, but they may fail to detect time synchronization errors. For example, this may be the case if the phase error resulting from a time offset is too small or phase and timing errors cancel each other out at the used test frequency. Typically, when measuring phase and timing stability via looping back radio frequency (RF) signals, a sufficient signal-to-noise ratio (SNR) is required. This contradicts with desire to suppress direct coupling paths in normal radar operation. Hence, countermeasures against direct coupling (e.g., a high-pass filter in IF) should either be bypassed or dedicated loopback paths should be added. The latter is frequently present within conventional ICs, but not between different ICs in cascaded setups.

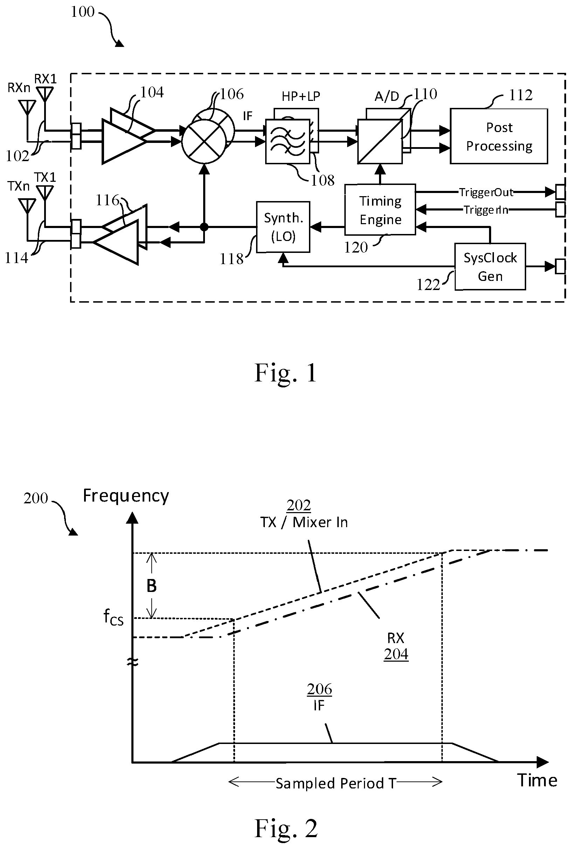

Fig. 1 shows an example of a radar device 100. The radar device 100 is a typical transceiver IC for FMCW radar systems, which comprises a plurality of receiver channels, each of which comprises a receiver (RX) antenna 102, a receiver unit 104 (i.e., an amplifier), a mixer unit 106, a filter unit 108, and an analog-to-digital converter (ADC) unit 110. Furthermore, the radar device 100 comprises a post-processing unit 112, transmitter (TX) antennas 114, transmitter units 116 (i.e., amplifiers), a frequency synthesizer 118 (i.e., a local oscillator), a timing engine 120, and a system clock generator 122.
In operation, the system clock generator 122 functions as a central clock generation unit for generating all system clocks. Furthermore, the timing engine 120 ensures timing synchronization among all units in the signal path; it is typically controlled by internal or external trigger signals and generates outgoing trigger signals for other chips. The frequency synthesizer 118 generates the basic time-dependent frequency modulated signal. It is noted that there may also be frequency multiplier stages that convert the synthesizer output signal to a higher frequency. Furthermore, the transmitter units 116 convert and amplify the transmit signal before outputting it to the TX antennas 114. Furthermore, the receiver units 104 amplify the signal received from the RX antennas 102. The mixer units 106 down-convert the received signal to an intermediate frequency ($f_{IF}$). The filter units 108 perform high-pass filtering to suppress self-interference and low-pass filtering to suppress aliasing after sampling. Furthermore, the ADC units 110 convert the filtered IF signal from the analog domain to the digital domain by sampling and quantization. Furthermore, the radar device 100 is prepared for integration into a cascaded setup, in that it comprises input and output ports as local-oscillator interface (LOIF) for FMCW signals from another local oscillator (not shown).

More specifically, the radar device 100 shown in Fig. 1 may be clocked with a basic clock, e.g., derived from a crystal oscillator. All internal clocks may be derived from this clock. Furthermore, the functional units of the radar device 100 may also be synchronized in time to this clock. Based on a predefined event (e.g., the rise of an external trigger signal, an internal timer, or a software write), the timing engine 120 initiates a sequence where the frequency synthesizer 118 generates a continuous wave signal with a frequency that typically changes linearly over time. Such a signal is called a chirp signal; it can be characterized by a start frequency fcs, a duration T and a bandwidth B. Furthermore, the chirp slope can be derived by $K_f = B/T$. The generated signal is then frequency multiplied, adapted, amplified, and transmitted through the TX antennas 114.

The transmitted signal then travels as an electromagnetic wave, for example through air, until it reaches a target that reflects the incoming wave back to the radar device 100. The reflected wave reaches the radar device 100 after a certain amount of time, which is defined by 2*Distance/SpeedOfLight. After reaching the RX antennas 102 of the radar device 100, the resulting signal is amplified by the receiver units 104 and down-converted by the mixer units 106, where the mixing signal is the instantaneous frequency of the multiplied local oscillation. The output signals of the mixer units 106, i.e., the IF signals are then filtered and sent to the ADC units 110. The operation of the ADC units 110 (i.e., the start of the sampling and the length of the sampling window) may also be controlled by the timing engine 120. Finally, the digitized data are post-processed by the post-processing unit, which may be implemented as hardware and/or software.

**Fig. 2** shows a signal diagram 200 for the radar device shown in Fig. 1. Since the RX signal 204 is basically a delayed copy of the multiplied local oscillator signal, the output of the mixers (i.e., the IF signal 206) is a continuous wave signal whose frequency is equivalent to RX signal delay versus the chirp slope and hence to the distance of the radar device to the target.

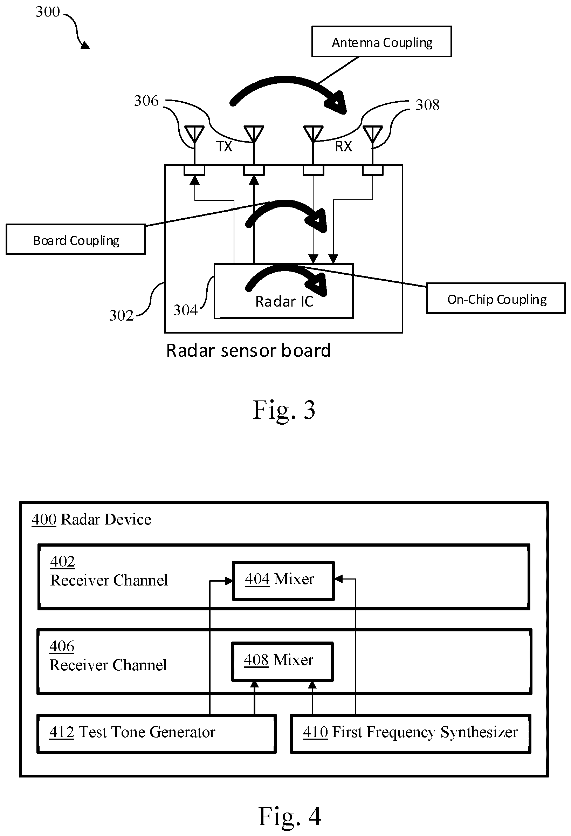

**Fig. 3** shows an example of coupling paths 300 on a radar sensor board. Usually, before converting the signal to the digital domain, the output of the mixer is filtered for mainly two reasons. First, the analog-to-digital conversion requires attenuation of signals with a frequency beyond the limit of the sampling theorem to suppress aliasing. Hence, a low-pass filter is also added to the channel before passing the signal to the ADC units. Second, self-interference due to local coupling within an IC, on the PCB, or from TX antennas to RX antennas creates an unwanted signal with a high power that would limit the dynamic range for further processing. Since the coupling paths are usually much shorter than the distance to the nearest target of interest, the resulting beat frequency is very low. Hence, to suppress signals originating from self-interference, a high-pass filter introduces strong attenuation in the affected frequency range. Examples of such coupling paths are shown in Fig. 3: coupling between the RX antennas 308 and TX antennas 306, coupling on a radar sensor board 302 and coupling within a radar IC 304.

Now discussed are a radar device and a corresponding method of operating a radar device, which facilitate obtaining a sufficient SNR for testing time synchronization between different receiver channels in the radar device. The presently disclosed radar device may comprise a single integrated circuit or a plurality of cascaded integrated circuits. The presently disclosed radar device may for example be integrated into a vehicle.

**Fig. 4** shows an illustrative embodiment of a radar device 400. The radar device 400 comprises a plurality of receiver channels 402, 406, each one of which comprises a mixer 406, 406. In addition, the radar device 400 comprises a first frequency synthesizer 410 (i.e., a local oscillator) and at least one test tone generator 412. The first frequency synthesizer 410 is configured to generate a chirp signal. Furthermore, the test tone generator 412 is configured to generate a test tone signal having a constant frequency. Furthermore, the mixers 406, 408 integrated into the receiver channels 402 are configured to be fed with the chirp signal generated by the first frequency synthesizer 410 and with the test tone signal generated by the test tone generator 412. By feeding the mixers 406, 408 with the chirp signal and with the test tone signal, the output signals of the mixers 406, 408 (i.e., the IF signals) also become chirp signals, which in turn increases the signal energy available for accurate measurements. In other words, a sufficient SNR for testing time synchronization between the receiver channels 402, 404 can be obtained.

In one or more embodiments, the radar device further comprises at least one transmitter, wherein the test tone generator is configured to be coupled to the transmitter through a switch. This facilitates obtaining a sufficient SNR for testing time synchronization between different receiver channels in a radar device having a single, stand-alone radar IC. In one or more embodiments, the test tone generator is configured to be coupled to the receiver channels through a built-in self-test (BIST) structure. This facilitates obtaining a sufficient SNR for testing time synchronization between different receiver channels in a radar device having a single, stand-alone radar IC in which a BIST structure is available.

In one or more embodiments, the test tone generator is implemented as a second frequency synthesizer, wherein said second frequency synthesizer is embedded in a follower integrated circuit (IC) of the radar device. This facilitates obtaining a sufficient SNR for testing time synchronization between different receiver channels in a radar device containing cascaded ICs, in particular in a radar device having a leader IC and one or more follower ICs. In one or more embodiments, the receiver channels are distributed over multiple ICs, wherein each of the ICs comprises a test tone generator configured to be coupled to the respective receiver channels of said ICs through a BIST structure of said ICs. This facilitates obtaining a sufficient SNR for testing time synchronization between different receiver channels in a radar device containing cascaded ICs in which BIST structures are available.

In one or more embodiments, the radar device further comprises a post-processing unit configured to derive time offsets between the receiver channels from digitized output signals provided by the mixers. Thereby, the determination of the time offsets between the receiver channels is facilitated. In one or more embodiments, the post-processing unit is configured to compute a set of fast Fourier transforms (FFTs) of said digitized output signals. Thereby, the determination of the time offsets between the receiver channels is further facilitated. In one or more embodiments, the post-processing unit is configured to multiply, for given pairs of the receiver channels, the FFTs in the frequency domain and to compute a corresponding phase of sub-carriers. Thereby, the determination of the time offsets between the receiver channels is further facilitated. Furthermore, in one or more embodiments, the post-processing unit is configured to fit phase-over-frequency data derived from the computed phase of the sub-carriers by first-order polynomial whose slope is a measure of the time offsets. Thereby, the determination of the time offsets between the receiver channels is further facilitated.

In one or more embodiments, the receiver channels comprise analog-to-digital converters configured to digitize the output signals provided by the mixers. In this way, the post-processing of said output signals provided by the mixers is facilitated. Furthermore, in one or more embodiments, the receiver channels comprise filters configured to filter the output signals provided by the mixers. In this way, aliasing may be suppressed, as well as signals originating from self-interference.

The presently disclosed radar device and corresponding operating method facilitate testing time synchronization between multiple RX channels of one integrated transceiver IC performing FMCW radar or between multiple ICs of a radar system with cascaded ICs. It is noted that the term "receiver channel" or "RX channel", as used herein, refers to a chain of circuits that carry out typical receiver functions. To enable time difference measurements, a test tone generator for a fixed frequency continuous wave is applied. Such a generator may be a separate entity on a single chip (dedicated circuitry), or an otherwise unused local oscillator (LO) in a system with cascaded radar ICs. While the frequency of the test tone generator remains constant during the entire test procedure, the frequency of the LO of the device under test (DUT) is linearly increased during the measurement period - as if a regular chirp operation would be performed. The fixed frequency signal received on the individual RX antennas of the DUT may then be down-mixed with the chirp signal from the LO. This results in chirp signals at the intermediate frequency (IF) output of the mixers - in contrast to regular FMCW radar operation, where IF signal is composed of various sin-waves. After down-mixing, the IF signals may be filtered, sampled and quantized by analog-to-digital converters. The calculation of time differences between RX channels may be performed by cross-correlating RX signals in a frequency domain, extracting a useful frequency range and fitting the phase of the cross-correlation by a first-order polynomial. In accordance with the present disclosure, it is not necessary to use a dedicated loopback path to the radar device's hardware to obtain a good SNR for the timing measurements. Since the IF signal may be a chirp signal with spectral components at the entire passband of the IF filter stages, sufficient signal energy may be available for accurate measurements when relying on parasitic coupling that already exists in realistic designs.

Normally, the frequency synthesizer (i.e., LO) of a FMCW radar device generates a continuous wave signal with a frequency that changes linearly over time. This signal is used as input for the transmitters and as a second input for the mixers. The signals received by the receiver channels comprise delayed and attenuated copies of the transmitted signal. After down-mixing, this yields a superposition of harmonic signals (i.e., tones) at the IF stage. In contrast, in accordance with the present disclosure a chirp signal may be used as input to the mixer, but a constant test tone as input to the transmitters. Hence, the signal at the output of the mixer stage is no longer a tone (or a superposition of tones) but a chirp signal. This signal may then as usual be filtered, sampled, quantized, and stored in memory. Afterwards, the signal data may be post-processed utilizing the good correlation properties of chirp signals. First, fast Fourier transforms (FFTs) of all RX channels may be computed. Then, FFT outputs of a pair of RX antennas may be multiplied in the frequency domain in a conjugate-complex fashion and the phase of sub-carriers in a useful range may be computed. Finally, the phase-over-frequency data may be fitted by a first order polynomial whose first-order coefficient (i.e., slope) is a direct measure for the time offset between the signals of the two RX channels. The post-processing may be repeated for other pairs of RX antennas, yielding a set of highly accurate time offsets within the radar device.

Self-interference by non-zero coupling from TX to RX (on the IC, via a board, or from TX antennas to RX antennas) may cause that radar systems malfunction. Especially for FMCW radar systems, a common method to mitigate or reduce the effects of such self-interference is to include a high-pass filter into the RX signal path after down-conversion, thereby suppressing low frequency signal components that originate from self-interference. However, in accordance with the present disclosure, the IF signal may be a chirp signal, which has an inherent wide-band characteristic. Hence, it is for instance not necessary to bypass or tweak the high-pass filter in the IF chain to obtain an acceptable SNR. Furthermore, it enables the utilization of direct coupling paths between leader and follower ICs for transmission of the test signal.

As will be explained in more detail below, the presently disclosed radar device may be implemented in different ways. More specifically, there are multiple options for generating the constant test tone, for example depending on the use case. For radar devices with a stand-alone radar IC, a separate test tone generator may be used. This generator may reside inside or outside of the IC. For radar devices deploying a cascading scheme with two ICs, the unused frequency synthesizer of the follower IC may be utilized to generate the constant test tone. In that case, the IC circuitry should provide the option to route input signals to the transmitters and mixers separately. Furthermore, for radar devices deploying a cascading scheme with three or more ICs, one of the ICs may be assigned to generate the test tone while the check for synchronicity is performed on the remaining ICs. In that case, no hardware extension or enhancement is needed, and full coverage may be obtained by applying a round-robin scheme.

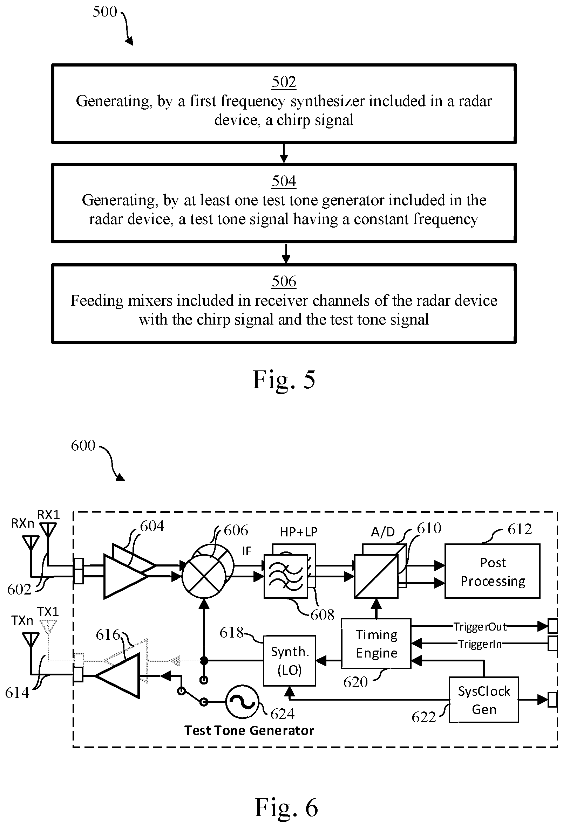

**Fig. 5** shows an illustrative embodiment of a method 500 of operating a radar device. The method 500 comprises the following steps. At 502, a first frequency synthesizer included in the radar device generates a chirp signal. Furthermore, at 504, at least one test tone generator included in the radar device generates a test tone signal having a constant frequency. Furthermore, at 506, mixers included in receiver channels of the radar device are fed with the chirp signal and the test tone signal. As mentioned above with reference to the corresponding radar device shown in Fig. 4, by feeding the mixers with the chirp signal and with the test tone signal, the output signals of the mixers also become chirp signals, which in turn increases the signal energy available for accurate measurements.

**Fig. 6** shows another illustrative embodiment of a radar device 600. In particular, a possible implementation of the presently disclosed radar device is shown, having a single, stand-alone radar IC. The radar device 600 comprises a plurality of receiver channels, each of which comprises an RX antenna 602, a receiver unit 604 (i.e., an amplifier), a mixer unit 606, a filter unit 608, and an ADC unit 610. Furthermore, the radar device 600 comprises a post-processing unit 612, TX antennas 614, transmitter units 616 (i.e., amplifiers), a frequency synthesizer 618 (i.e., a local oscillator), a timing engine 620, and a system clock generator 622. In addition, the radar device 600 comprises a test tone generator 624 configured to generate a test tone signal having a constant frequency. The test tone generator 624 can be connected to a TX antenna 614 through a switch, such that the mixer units 606 can be fed with the test tone signal.

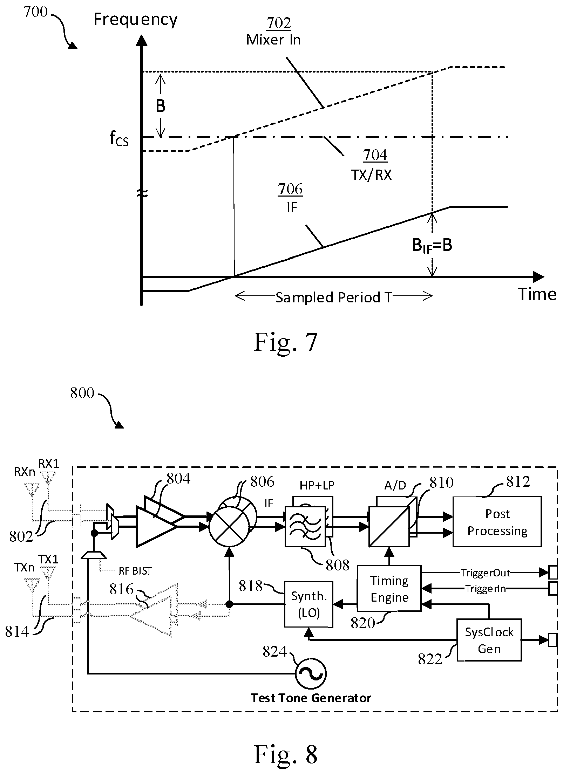

More specifically, the radar device 600 has been extended by a test tone generator 624 and a switch which can connect the input of one of the transmitter units 616 to the test tone generator 624 instead of to the output of the frequency synthesizer 618. The LO input of the mixer units 606 remains connected to the frequency synthesizer 618. During a test mode of the radar device 600, a chirp operation may be started on the timing engine 620, frequency synthesizer 618, and ADC units 610. The receiver units 604 receive the test tone signal from the transmitter unit 616 via chip and board coupling and provide an amplified version to the RX input of the individual mixer units 606. Since the signal on the LO input of the mixer units 606 is a chirp, the output signal of the mixer units 606 (i.e., the IF signal) also becomes a chirp. This is illustrated in Fig. 7.

**Fig. 7** shows a signal diagram 700 for the radar device shown in Fig. 6. The signal diagram 700 shows that the bandwidth BIF of the IF signal 706 is the same as the bandwidth B of the chirp signal. The high-pass (HP) filters and low-pass (LP) filters that will receive the IF signal 706 will subsequently reduce the signal energy at the edges of the IF frequency range, but the most energy in the IF passband can be used entirely for timing estimation. Therefore, it is not necessary to bypass the HP filters to obtain an acceptable SNR for phase estimation.

**Fig. 8** shows a further illustrative embodiment of a radar device 800. In particular, a possible implementation of the presently disclosed radar device is shown, having a single, stand-alone radar IC in which a BIST structure is available. The radar device 800 comprises a plurality of receiver channels, each of which comprises an RX antenna 802, a receiver unit 804 (i.e., an amplifier), a mixer unit 806, a filter unit 808, and an ADC unit 810. Furthermore, the radar device 800 comprises a post-processing unit 812, TX antennas 814, transmitter units 816 (i.e., amplifiers), a frequency synthesizer 818 (i.e., a local oscillator), a timing engine 820, and a system clock generator 822. In addition, the radar device 800 comprises a test tone generator 824 configured to generate a test tone signal having a constant frequency. The test tone generator 824 is connected to the receiver units 804 through multiplexers that form part of the BIST structure, such that the mixer units 806 can be fed with the test tone signal.

More specifically, there may be cases in which board coupling is not sufficient to achieve an acceptable SNR for estimating the timing. In those cases, however, the IC may already contain an internal BIST structure through which an internal signal can be fed into the RF path between the antenna ports and first amplifier stages. Then, the test tone generator 824 is connected to this BIST structure. It is noted that in such a case the test tone generator 824 and frequency synthesizer 818 should operate independently.

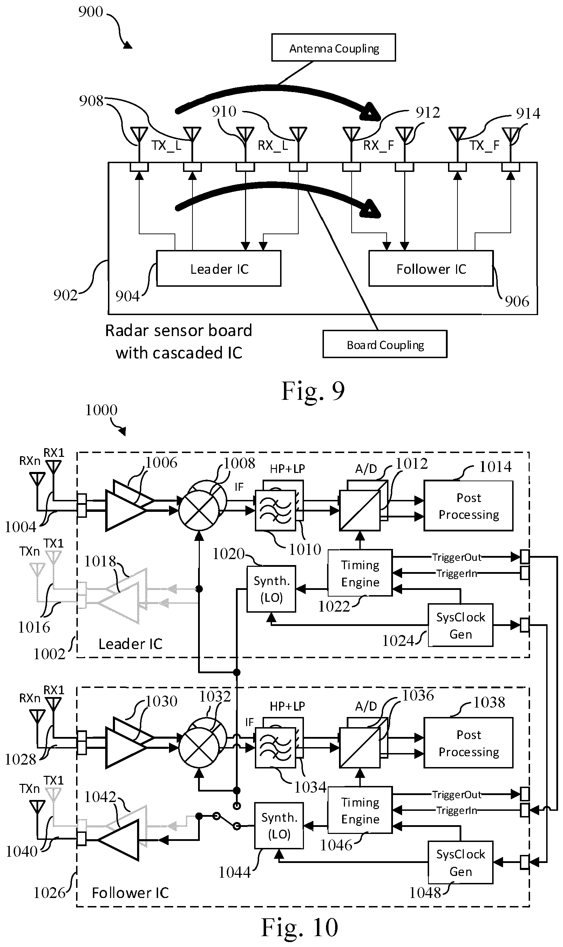

In the following, further possible implementations of the presently disclosed radar device are discussed, which are based on cascaded radar ICs instead of a stand-alone radar IC. A radar device that deploys cascading with two ICs typically comprises at least a leader IC, a follower IC and a printed circuit board (PCB). More specifically, one radar transceiver IC acts as a leader, generating a basic system clock for all ICs within the system, a frequency modulated LO signal and a trigger signal. Furthermore, another radar transceiver IC acts as a follower, consuming the basic system clock, the frequency modulated LO signal and the trigger signal. Finally, the PCB carries fabric and circuitry that distribute the above-mentioned signals from the leader IC to the follower IC. The LO signal for the leader IC is also routed through chip interfaces (LOIF) via the PCB to obtain the same characteristic for the leader IC and the follower IC. On a radar device with cascaded ICs parasitic coupling is present via the PCB or from TX to RX antennas, as illustrated in Fig. 9.

**Fig. 9** shows an example of coupling paths 900 on a radar sensor board with cascaded ICs. In particular, the radar sensor board 902 comprises a leader IC 904 and a follower IC 906. The coupling paths 900 comprise an antenna coupling path and a board coupling path. A cascaded system of this kind typically synchronizes the timing engine in both ICs 904, 906 via a shared system clock and the trigger signal sent from the leader IC 904 to the follower IC 906. Furthermore, the LO of the leader IC 904 is used to generate the chirp signal and then distributed via the board 902 to both ICs 904, 906. An important property of the cascaded system is that ADC sampling is synchronized across all ICs 904, 906. If synchronization is not guaranteed, data from different ICs cannot be correctly combined, and target detection and estimation performance may be impacted. On the other hand, the trigger mechanism may be impacted by random or systematic distortions such as external noise, clock jitter, or reduced slew rate on the trigger line. Hence, from a functional safety perspective, monitoring and testing time synchronization is important.

**Fig. 10** shows a further illustrative embodiment of a radar device 1000. In particular, a possible implementation of the presently disclosed radar device is shown, having two cascaded radar ICs. More specifically, the radar device 1000 comprises a leader IC 1002 and a follower IC 1026. The leader IC 1002 comprises a plurality of receiver channels, each of which comprises an RX antenna 1004, a receiver unit 1006 (i.e., an amplifier), a mixer unit 1008, a filter unit 1010, and an ADC unit 1012. Furthermore, the leader IC 1002 comprises a post-processing unit 1014, TX antennas 1016, transmitter units 1018 (i.e., amplifiers), a frequency synthesizer 1020 (i.e., a local oscillator), a timing engine 1022, and a system clock generator 1024. Similarly, the follower IC 1026 comprises a plurality of receiver channels, each of which comprises an RX antenna 1028, a receiver unit 1030 (i.e., an amplifier), a mixer unit 1032, a filter unit 1034, and an ADC unit 1036. Furthermore, the follower IC 1026 comprises a post-processing unit 1038, TX antennas 1040, transmitter units 1042 (i.e., amplifiers), a frequency synthesizer 1044 (i.e., a local oscillator), a timing engine 1046, and a system clock generator 1048.

It is noted that the follower IC 1026 is a generic radar IC, having the same components as the leader IC. This means that the follower IC 1026 still possesses a frequency synthesizer 1044, even if this frequency synthesizer 1044 is not used in the cascaded operation. For this reason, the frequency synthesizer 1044 can be used as a test tone generator of the kind set forth. In other words, in the test mode the cascaded radar device 1000 utilizes the "spare" frequency synthesizer 1044 for generating the constant test tone. To facilitate this implementation, the inputs of the mixer units 1032 is driven from a different source than the inputs of the transmitter units 1042, which is illustrated by the switch between the frequency synthesizer 1044 and the transmitter units 1042.

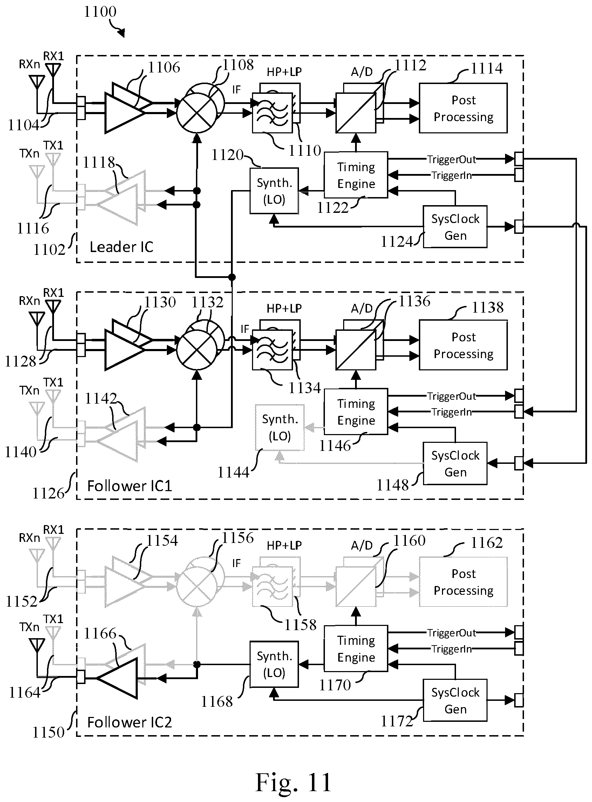

**Fig. 11** shows a further illustrative embodiment of a radar device 1100. In particular, a possible implementation of the presently disclosed radar device is shown, having three cascaded radar ICs. More specifically, the radar device 1100 comprises a leader IC 1102, a first follower IC 1126 and a second follower IC 1150. Each of the ICs comprises the same components as, for example, the cascaded ICs of the implementation shown in Fig. 10. However, unlike the follower IC shown in Fig. 10, the follower ICs 1126, 1150 do not comprise a switch. Instead, one of the follower ICs (i.e., the second follower IC 1150) only acts as test tone generator while the synchronicity between the leader IC 1102 and the other follower IC (i.e., the first follower IC 1126) is being tested. Accordingly, the unused frequency synthesizer 1168 of the second follower IC 1150 is used as a source for generating the test tone signal while the synchronicity between the leader IC 1102 and the first follower IC 1126 is being tested. It is noted that a coverage of timing differences between all the ICs can be achieved by applying an alternating scheme, wherein the role of test tone generation is changed over time, e.g., from run to run. According to this scheme, after the synchronicity between the leader IC 1102 and the first follower IC 1126 has been tested, the synchronicity between the leader IC 1102 and the second follower IC 1150 may been tested by using the unused frequency synthesizer 1146 of the first follower IC 1126 is used as a source for generating the test tone signal. By applying this approach, no hardware extension is needed at all.

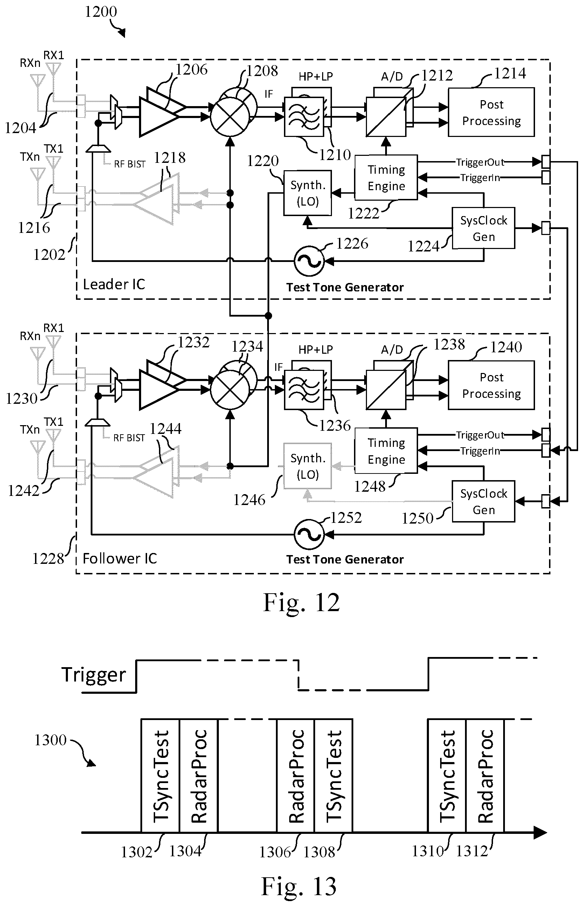

**Fig. 12** shows a further illustrative embodiment of a radar device 1200. In particular, a possible implementation of the presently disclosed radar device is shown, having two cascaded radar ICs in which BIST structures are available. More specifically, the radar device 1200 comprises a leader IC 1202 and a follower IC 1228. Each of the ICs comprises the same components as, for example, the cascaded ICs of the implementation shown in Fig. 10. However, unlike the follower IC shown in Fig. 10, the follower IC 1228 does not comprise a switch. Instead, both the leader IC 1202 and the follower IC 1128 comprise a test tone generator 1226, 1252 which is coupled to the BIST structures of the ICs 1202, 1128.

More specifically, there may be cases in which board coupling between cascaded ICs is not sufficient to achieve an acceptable SNR for estimating the timing. In those cases, however, the ICs may already contain internal BIST structures through which an internal signal can be fed into the RF path between the antenna ports and first amplifier stages within each IC. Then, each of the cascaded ICs may be equipped with its own test tone generator 1226, 1252. In that case, the test tone generators 1226, 1252 should be synchronized in frequency with the system clock generator 1224, 1250 of each IC. In this way, frequency synchronicity between all test tone generators in the cascaded system is enabled, because the system clock generators 1224, 1250 are synchronized among each other anyway. In the implementation shown in Fig. 12, the test tone generators 1226, 1252 should deliver a fixed-tone continuous wave signal with a high quality in terms of frequency stability and phase noise. One possibility to implement such a generator is a multiplier of the system clock. It is noted that the implementation shown in Fig. 12 advantageously avoids the need for an additional RF BIST structure between the cascaded ICs.

The skilled person will appreciate that in any one of the above-described implementations of the radar device, the post-processing unit may compute (i.e., estimate) the timing offsets as shown in detail below. In the following calculations $x_{ch}(t)$ represents the transmitted chirp signal.

Then, assuming a non-frequency selective channel, the received signal on RX channel i can be denoted as shown in equation 1, in which $g_i$ is a gain, $\varphi_i$ a fixed phase offset and $t_{Off,i}$ the individual timing offset of RX channel i.

$$x_{RX,i}(t) = g_i \cdot \exp(j \cdot \varphi_i) \cdot x_{ch}(t - t_{Off,i}) \qquad \text{(Eq. 1)}$$

Then, in the frequency domain this becomes:

$$X_{RX,i}(f) = g_i \cdot \exp(j \cdot \varphi_i) \cdot \exp(-j2\pi f \cdot t_{Off,i}) \cdot X_{ch}(f) \qquad \text{(Eq. 2)}$$

Then, a cross-correlation between two receiver channels i and k yields the result shown in equations 3 and 4.

$$CCF_{ik}(f) = X_{RX,i}(f) \cdot conj(X_{RX,k}(f)) \qquad \text{(Eq. 3)}$$

$$CCF_{ik}(f) = g_i \cdot g_k \cdot \exp(j \cdot (\varphi_i - \varphi_k)) \cdot \exp(-j2\pi f \cdot (t_{Off,i} - t_{Off,k})) \cdot$$
$$X_{ch}(f) \cdot conj(X_{ch}(f)) \qquad \text{(Eq. 4)}$$

Using the well-known auto-correlation property of chirp signals $X_{ch}(f) \cdot conj(X_{ch}(f)) = 1$, the phase of the cross-correlation function is calculated as shown in equations 5 and 6, in which $\Delta_{\varphi ik}$ denotes the constant phase difference between RX chains i and k and $\Delta t_{Off,ik}$ the wanted time difference between the two RX channels.

$$angle(CCF_{ik}(f)) = (\varphi_i - \varphi_k) - 2\pi f \cdot (t_{Off,i} - t_{Off,k}) \qquad \text{(Eq. 5)}$$

$$angle(CCF_{ik}(f)) = \Delta\varphi_{ik} - 2\pi f \cdot \Delta t_{Off,ik} \qquad \text{(Eq. 6)}$$

It is noted that, for practical realizations of the presently disclosed radar device, data may not be received in a complex format. In other words, there may only be an in-phase signal that is further processed after the mixer. Alternatively, the presently disclosed radar device may be realized using both real-valued data and complex data. In that case, both I-data and Q-data will be output by the mixer and further processed. In this way, a better performance may be achieved. Furthermore, in practical realizations of the presently disclosed radar device, the received signals contain additive noise. In addition, the received chirp data is bandlimited, e.g., by high-pass and low-pass filters in the IF path. Finally, computations can only be done on sampled, discrete ADC data. For these reasons, the time offset estimation algorithm may comprise the following steps, assuming that sampled and ADC converted signals $x_{RX1}(k)$ and $x_{RX2}(k)$ with $k=0...n_{FFT}-1$ are available in a memory of the post-processing unit.

First, FFTs may be computed as shown in equations 7 and 8.

$$X_{RX1} = FFT(x_{RX1}) \qquad \text{(Eq. 7)}$$

$$X_{RX2} = FFT(x_{RX2}) \qquad \text{(Eq. 8)}$$

Then, in order to cope with bandlimited chirp, sub-carriers $n = n_{Min}... n_{Max}$ may be selected from the interval (0, nFFT/2) that contain the main energy from the chirp signal. Subsequently, a cross-correlation function may be computed in the frequency domain by element-wise conjugate complex multiplication, as shown in equation 9.

$$CCF_{12}(n) = X_{RX1}(n) \cdot conj(X_{RX1}(n)) \qquad \text{(Eq. 9)}$$

Then, the phase of the cross-correlation function may be computed, as shown in equation 10. It is noted that to ensure ambiguity-free and wrap-free results, the angle computation may include an unwrap step.

$$\Phi_{CCF,12}(n) = \text{angle}(CCF_{12}(n)) \qquad (Eq.\ 10)$$

Then, the noisy phase data may be fit with a linear function $f(n) = b_0 + b_1*n$ in a minimum mean square error (MMSE) sense. Next, the estimated time offset between the two receiver channels may be computed as shown in equation 11.

$$\Delta t_{Off,Est} = b_1 \cdot n_{FFT} / (2\pi \cdot fSample) \qquad (Eq.\ 11)$$

Finally, the estimated time offset may be compared with a given threshold and an error may be flagged if the estimated time offset exceeds the threshold. In case more data needs to be collected to obtain a sufficient SNR, CCFs from multiple FFT periods may be accumulated before computing the angle. Furthermore, it is noted that $b_0$ is equal to the phase difference between the two receiver channels, with respect to the test tone transmitted. This phase difference is not necessarily the same as it is observed during normal radar operation.

**Fig. 13** shows an illustrative embodiment of a test execution flow 1300. In automotive applications, a continuous monitoring of critical system characteristics is crucial for functional safety. Therefore, the above-described timing synchronization tests may be performed regularly during a monitoring phase, which may be prepended or appended to regular radar operation, as shown in Fig. 13. Specifically, in the test execution flow 1300, timing synchronization tests 1302, 1308, 1310 are executed both before and after the regular radar processing 1304, 1306, 1312.

It is noted that the SNR for timing estimations may be further improved in the following way. Existing IC-internal loopback path may be used for measuring time offsets between receiver channels on the same chip (i.e., radar IC), which may provide significantly less attenuation. Once proper synchronization is confirmed at this level, chip-to-chip timing offsets may be computed by combining results from all antennas per chip. Furthermore, a phase stability test may be added. More specifically, as stated before, the coefficient b0 provides an estimate for the phase difference between receiver channels - including any phase rotation introduced by the loopback path. Hence, this estimated phase difference is likely not suitable to measure or calibrate phase alignment for normal operation. It may however be feasible to measure the phase differences before and after normal operation and check for phase stability to ensure functional safety.

Furthermore, it is noted that the presently disclosed method facilitates implementing a self-calibration of the radar device. In particular, if the radar device exhibits timing uncertainties by design, for example due to a change of group delay of analog filters dependent on temperature, the presently disclosed method may be used to determine the actual timing offset and provide a base for later correction and compensation of these offsets.

Finally, it is noted that, in view of emission requirements, it might be desirable to avoid transmission of a fixed tone. In that case, an alternative approach might be used for radar devices with cascaded ICs, in which a coarse time synchronization may be ensured or checked by other means. More specifically, the actually inactive frequency synthesizer in one of the follower ICs may be used to generate a chirp signal with a different slope than the one on the leader IC. The result is again a chirp signal in IF - which can be evaluated using the same algorithm but with different scaling. Coarse timing synchronization is just noted to ensure that the frequency difference between both chirps sources is within IF bandwidth for a sufficiently long time and hence enough signal energy is present in the capture interval for post-processing. However, using a fixed tone as test signal is preferable since in this case distribution of electromagnetic waves from TX to RX is not time-dependent (standing-wave scenario) and hence propagation delays do not impact measurement results - down to the period of the RF signal.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

LIST OF REFERENCE NUMBERS

**[0068]**

| | |
|---|---|
| 100 | radar device |
| 102 | receiver antennas |
| 104 | receiver units (amplifiers) |
| 106 | mixer units |
| 108 | filter units |
| 110 | analog-to-digital converter units |
| 112 | post-processing unit |
| 114 | transmitter antennas |
| 116 | transmitter units (amplifiers) |
| 118 | frequency synthesizer (local oscillator) |
| 120 | timing engine |
| 122 | system clock generator |
| 200 | signal diagram |
| 202 | mixer input signal |
| 204 | received signal |
| 206 | intermediate frequency signal |
| 300 | coupling paths |
| 302 | radar sensor board |
| 304 | radar IC |
| 306 | transmitter antennas |
| 308 | receiver antennas |
| 400 | radar device |
| 402 | receiver channel |
| 404 | mixer |
| 406 | receiver channel |
| 408 | mixer |
| 410 | first frequency synthesizer |
| 412 | test tone generator |
| 500 | method of operating a radar device |
| 502 | generating, by a first frequency synthesizer included in a radar device, a chirp signal |
| 504 | generating, by at least one test tone generator included in the radar device, a test tone signal having a constant frequency |
| 506 | feeding mixers included in receiver channels of the radar device with the chirp signal and the test tone signal |
| 600 | radar device |
| 602 | receiver antennas |
| 604 | receiver units (amplifiers) |
| 606 | mixer units |
| 608 | filter units |
| 610 | analog-to-digital converter units |
| 612 | post-processing unit |
| 614 | transmitter antennas |
| 616 | transmitter units (amplifiers) |
| 618 | frequency synthesizer (local oscillator) |
| 620 | timing engine |
| 622 | system clock generator |
| 624 | test tone generator |
| 700 | signal diagram |

| 702 | mixer input signal |
| 704 | transmitted/received signal |
| 706 | intermediate frequency signal |
| 800 | radar device |
| 802 | receiver antennas |
| 804 | receiver units (amplifiers) |
| 806 | mixer units |
| 808 | filter units |
| 810 | analog-to-digital converter units |
| 812 | post-processing unit |
| 814 | transmitter antennas |
| 816 | transmitter units (amplifiers) |
| 818 | frequency synthesizer (local oscillator) |
| 820 | timing engine |
| 822 | system clock generator |
| 824 | test tone generator |
| 900 | coupling paths |
| 902 | radar sensor board with cascaded ICs |
| 904 | leader IC |
| 906 | follower IC |
| 908 | transmitter antennas of leader IC |
| 910 | receiver antennas of leader IC |
| 912 | receiver antennas of follower IC |
| 914 | transmitter antennas of follower IC |
| 1000 | radar device |
| 1002 | leader IC |
| 1004 | receiver antennas |
| 1006 | receiver units (amplifiers) |
| 1008 | mixer units |
| 1010 | filter units |
| 1012 | analog-to-digital converter units |
| 1014 | post-processing unit |
| 1016 | transmitter antennas |
| 1018 | transmitter units (amplifiers) |
| 1020 | frequency synthesizer (local oscillator) |
| 1022 | timing engine |
| 1024 | system clock generator |
| 1026 | follower IC |
| 1028 | receiver antennas |
| 1030 | receiver units (amplifiers) |
| 1032 | mixer units |
| 1034 | filter units |
| 1036 | analog-to-digital converter units |
| 1038 | post-processing unit |
| 1040 | transmitter antennas |
| 1042 | transmitter units (amplifiers) |
| 1044 | frequency synthesizer (local oscillator) |
| 1046 | timing engine |
| 1048 | system clock generator |
| 1100 | radar device |
| 1102 | leader IC |
| 1104 | receiver antennas |
| 1106 | receiver units (amplifiers) |
| 1108 | mixer units |
| 1110 | filter units |
| 1112 | analog-to-digital converter units |
| 1114 | post-processing unit |
| 1116 | transmitter antennas |

| 1118 | transmitter units (amplifiers) |
| 1120 | frequency synthesizer (local oscillator) |
| 1122 | timing engine |
| 1124 | system clock generator |
| 1126 | follower IC1 |
| 1128 | receiver antennas |
| 1130 | receiver units (amplifiers) |
| 1132 | mixer units |
| 1134 | filter units |
| 1136 | analog-to-digital converter units |
| 1138 | post-processing unit |
| 1140 | transmitter antennas |
| 1142 | transmitter units (amplifiers) |
| 1144 | frequency synthesizer (local oscillator) |
| 1146 | timing engine |
| 1148 | system clock generator |
| 1150 | follower IC2 |
| 1152 | receiver antennas |
| 1154 | receiver units (amplifiers) |
| 1156 | mixer units |
| 1158 | filter units |
| 1160 | analog-to-digital converter units |
| 1162 | post-processing unit |
| 1164 | transmitter antennas |
| 1166 | transmitter units (amplifiers) |
| 1168 | frequency synthesizer (local oscillator) |
| 1170 | timing engine |
| 1172 | system clock generator |
| 1200 | radar device |
| 1202 | leader IC |
| 1204 | receiver antennas |
| 1206 | receiver units (amplifiers) |
| 1208 | mixer units |
| 1210 | filter units |
| 1212 | analog-to-digital converter units |
| 1214 | post-processing unit |
| 1216 | transmitter antennas |
| 1218 | transmitter units (amplifiers) |
| 1220 | frequency synthesizer (local oscillator) |
| 1222 | timing engine |
| 1224 | system clock generator |
| 1226 | test tone generator |
| 1228 | follower IC |
| 1230 | receiver antennas |
| 1232 | receiver units (amplifiers) |
| 1234 | mixer units |
| 1236 | filter units |
| 1238 | analog-to-digital converter units |
| 1240 | post-processing unit |
| 1242 | transmitter antennas |
| 1244 | transmitter units (amplifiers) |
| 1246 | frequency synthesizer (local oscillator) |
| 1248 | timing engine |
| 1250 | system clock generator |
| 1300 | test execution flow |
| 1302 | timing synchronization test |
| 1304 | radar processing |
| 1306 | radar processing |

1308    timing synchronization test
1310    timing synchronization test
1312    radar processing

**Claims**

1.  A radar device, comprising:

    a plurality of receiver channels;
    a plurality of mixers, wherein each of the receiver channels comprises one of said mixers;
    a first frequency synthesizer configured to generate a chirp signal;
    at least one test tone generator configured to generate a test tone signal having a constant frequency;
    wherein said mixers are configured to be fed with said chirp signal and with the test tone signal.

2.  The radar device of claim 1, further comprising at least one transmitter, wherein the test tone generator is configured to be coupled to the transmitter through a switch.

3.  The radar device of claim 1, wherein the test tone generator is configured to be coupled to the receiver channels through a built-in self-test, BIST, structure.

4.  The radar device of claim 1, wherein the test tone generator is implemented as a second frequency synthesizer, wherein said second frequency synthesizer is embedded in a follower integrated circuit, IC, of the radar device.

5.  The radar device of claim 1, wherein said receiver channels are distributed over multiple ICs, and wherein each of the ICs comprises a test tone generator configured to be coupled to the respective receiver channels of said ICs through a BIST structure of said ICs.

6.  The radar device of any preceding claim, further comprising a post-processing unit configured to derive time offsets between the receiver channels from digitized output signals provided by the mixers.

7.  The radar device of claim 6, wherein the post-processing unit is configured to compute a set of fast Fourier transforms, FFTs, of said digitized output signals.

8.  The radar device of claim 7, wherein the post-processing unit is configured to multiply, for given pairs of the receiver channels, the FFTs in the frequency domain and to compute a corresponding phase of sub-carriers.

9.  The radar device of claim 8, wherein the post-processing unit is configured to fit phase-over-frequency data derived from the computed phase of the sub-carriers by a first-order polynomial whose slope is a measure of the time offsets.

10. The radar device of any one of claims 6 to 9, wherein the receiver channels comprise analog-to-digital converters configured to digitize the output signals provided by the mixers.

11. The radar device of any one of claims 6 to 10, wherein the receiver channels comprise filters configured to filter the output signals provided by the mixers.

12. A vehicle comprising the radar device of any preceding claim.

13. A method of operating a radar device, comprising:

    generating, by a first frequency synthesizer included in the radar device, a chirp signal;
    generating, by at least one test tone generator included in the radar device, a test tone signal having a constant frequency;
    feeding mixers included in receiver channels of the radar device with the chirp signal and the test tone signal.

14. The method of claim 13, further comprising deriving, by a post-processing unit included in the radar device, time offsets between the receiver channels from digitized output signals provided by the mixers.

**Amended claims in accordance with Rule 137(2) EPC.**

1. A radar device (400) implemented as a single radar integrated circuit, IC, comprising:

   a plurality of receiver channels (402, 406);
   a plurality of mixers (404, 408), wherein each of the receiver channels (402, 406) comprises one of said mixers (404, 408);
   a first frequency synthesizer (410) configured to generate a chirp signal;
   at least one test tone generator (412) configured to generate a test tone signal having a constant frequency for testing time synchronization between the receiver channels (402, 406);
   **characterized in that** said mixers (404, 408) are configured to be fed with said chirp signal and with the test tone signal.

2. The radar device (400) of claim 1, further comprising at least one transmitter, wherein the test tone generator (412) is configured to be coupled to the transmitter through a switch.

3. The radar device (400) of claim 1, wherein the test tone generator (412) is configured to be coupled to the receiver channels (402, 406) through a built-in self-test, BIST, structure for testing time synchronization between the receiver channels (402, 406).

4. A radar device (400) containing cascaded ICs, comprising:

   a plurality of receiver channels (402, 406);
   a plurality of mixers (404, 408), wherein each of the receiver channels (402, 406) comprises one of said mixers (404, 408);
   a first frequency synthesizer (410) configured to generate a chirp signal;
   at least one test tone generator (412) configured to generate a test tone signal having a constant frequency for testing time synchronization between the receiver channels (402, 406);
   wherein said mixers (404, 408) are configured to be fed with said chirp signal and with the test tone signal;
   **characterized in that** the test tone generator (412) is implemented as a second frequency synthesizer, wherein said second frequency synthesizer is embedded in a follower integrated circuit, IC, of the radar device (400).

5. The radar device (400) of claim 4, wherein said receiver channels (402, 406) are distributed over multiple ICs, and wherein each of the ICs comprises a test tone generator configured to be coupled to the respective receiver channels (402, 406) of said ICs through a BIST structure of said ICs.

6. The radar device (400) of any preceding claim, further comprising a post-processing unit configured to derive time offsets between signals received by the receiver channels (402, 406) from digitized output signals provided by the mixers (404, 408).

7. The radar device (400) of claim 6, wherein the post-processing unit is configured to compute a set of fast Fourier transforms, FFTs, of said digitized output signals.

8. The radar device (400) of claim 7, wherein the post-processing unit is configured to multiply, for predefined pairs of the receiver channels (402, 406), the FFTs in the frequency domain and to compute a corresponding phase of sub-carriers that contain the main energy of the chirp signal.

9. The radar device (400) of claim 8, wherein the post-processing unit is configured to fit phase-over-frequency data derived from the computed phase of the sub-carriers by a first-order polynomial whose slope is a measure of the time offsets.

10. The radar device (400) of any one of claims 6 to 9, wherein the receiver channels (402, 406) comprise analog-to-digital converters configured to digitize the output signals provided by the mixers (404, 408).

11. The radar device (400) of any one of claims 6 to 10, wherein the receiver channels (402, 406) comprise filters configured to filter the output signals provided by the mixers (404, 408).

12. A vehicle comprising the radar device (400) of any preceding claim.

13. A method (500) of operating a radar device implemented as a single radar integrated circuit, IC, comprising:

generating (502), by a first frequency synthesizer included in the radar device, a chirp signal;
generating (504), by at least one test tone generator included in the radar device, a test tone signal having a constant frequency, for testing time synchronization between the receiver channels;
**characterized by** feeding (506) mixers included in receiver channels of the radar device with the chirp signal and the test tone signal.

14. The method (500) of claim 13, further comprising deriving, by a post-processing unit included in the radar device, time offsets between signals received by the receiver channels from digitized output signals provided by the mixers.

15. A method (500) of operating a radar device containing cascaded ICs, comprising:

generating (502), by a first frequency synthesizer included in the radar device, a chirp signal;
generating (504), by at least one test tone generator included in the radar device, a test tone signal having a constant frequency, for testing time synchronization between the receiver channels;
feeding (506) mixers included in receiver channels of the radar device with the chirp signal and the test tone signal;
**characterized in that** the test tone generator is implemented as a second frequency synthesizer, wherein said second frequency synthesizer is embedded in a follower integrated circuit, IC, of the radar device.

100

104    106    HP+LP    A/D    110    112

RXn
RX1
102

IF

Post
Processing

TXn
TX1
114

116

Synth.
(LO)
118

Timing
Engine
120

TriggerOut
TriggerIn

SysClock
Gen
122

**Fig. 1**

200    Frequency

202
TX / Mixer In

B

$f_{CS}$

RX
204

206
IF

Sampled Period T    Time

**Fig. 2**

300

Antenna Coupling

306                                           308

TX          RX

Board Coupling

302      304      Radar IC      On-Chip Coupling

Radar sensor board

Fig. 3

400 Radar Device

402
Receiver Channel          404 Mixer

406
Receiver Channel          408 Mixer

412 Test Tone Generator          410 First Frequency Synthesizer

Fig. 4

500

```
                    502
Generating, by a first frequency synthesizer included in a radar
              device, a chirp signal
```

↓

```
                    504
Generating, by at least one test tone generator included in the
  radar device, a test tone signal having a constant frequency
```

↓

```
                    506
Feeding mixers included in receiver channels of the radar device
      with the chirp signal and the test tone signal
```

## Fig. 5

600

## Fig. 6

**Fig. 7**

**Fig. 8**

Fig. 9

Fig. 10

Fig. 11

Fig. 12

Fig. 13

**EUROPEAN SEARCH REPORT**

Application Number

EP 24 16 0554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/090015 A1 (BREEN DANIEL COLUM [US] ET AL) 30 March 2017 (2017-03-30) * paragraphs [0007], [0016], [0018], [0020], [0026], [0031], [0038], [0041] * | 1-14 | INV. G01S7/02 G01S7/40 G01S13/34 G01S13/931 |
| A | CN 113 067 592 A (INFINEON TECHNOLOGIES AG) 2 July 2021 (2021-07-02) * page 11 paragraph 1-2 * | 1-14 | |
| A | US 2019/154797 A1 (SUBBURAJ KARTHIK [IN] ET AL) 23 May 2019 (2019-05-23) * paragraph [0031] * | 1-14 | |
| A | Anonymous: "stackoverflow: matlab - Finding the difference between two signals - Stack Overflow", , 16 February 2017 (2017-02-16), pages 1-3, XP93198524, Retrieved from the Internet: URL:https://web.archive.org/web/2017021606 2131/https://stackoverflow.com/questions/1 5371577/finding-the-difference-between-two -signals [retrieved on 2024-08-26] * the whole document * | 8,9 | TECHNICAL FIELDS SEARCHED (IPC) G01S |
| A | Anonymous: "Cross-correlation - Wikipedia", , 9 November 2015 (2015-11-09), XP055858052, Retrieved from the Internet: URL:https://en.wikipedia.org/w/index.php?t itle=Cross-correlation&oldid=689852591 [retrieved on 2021-11-04] * the whole document * | 8,9 | |

The present search report has been drawn up for all claims

| Place of search | Date of completion of the search | Examiner |
|---|---|---|
| Munich | 26 August 2024 | Auinger, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0554

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2024

| Patent document cited in search report | Publication date | Patent family member(s) | Publication date |
|---|---|---|---|
| US 2017090015 A1 | 30-03-2017 | CN 106556821 A | 05-04-2017 |
| | | CN 114265027 A | 01-04-2022 |
| | | US 2017090015 A1 | 30-03-2017 |
| | | US 2019004148 A1 | 03-01-2019 |
| | | US 2020379084 A1 | 03-12-2020 |
| CN 113067592 A | 02-07-2021 | CN 113067592 A | 02-07-2021 |
| | | US 2021181326 A1 | 17-06-2021 |
| US 2019154797 A1 | 23-05-2019 | CN 107923973 A | 17-04-2018 |
| | | CN 114660557 A | 24-06-2022 |
| | | EP 3356849 A1 | 08-08-2018 |
| | | JP 6974813 B2 | 01-12-2021 |
| | | JP 7275421 B2 | 18-05-2023 |
| | | JP 2018529967 A | 11-10-2018 |
| | | JP 2021021742 A | 18-02-2021 |
| | | JP 2023085461 A | 20-06-2023 |
| | | US 2017090014 A1 | 30-03-2017 |
| | | US 2019154797 A1 | 23-05-2019 |
| | | US 2020209353 A1 | 02-07-2020 |
| | | WO 2017059317 A1 | 06-04-2017 |

EPO FORM P0459

For more details about this annex : see Official Journal of the European Patent Office, No. 12/82